# FASCICULE DE BREVET EUROPEEN

(11) **EP 1 854 659 B1**
(45) Date de publication et mention de la délivrance du brevet: **19.08.2009**
(21) Numéro de dépôt: 07356041.9
(22) Date de dépôt: 03.04.2007
(51) Int. Cl.: B60N 2/30, B60N 2/06

(54) **Siège escamotable notamment de rang 2**
Versenkbarer Sitz, insbesondere der zweiten Reihe
Retractable seat, in particular for the second row

(30) Priorité: 12.05.2006 FR 0604250
(43) Date de publication de la demande: 14.11.2007
(73) Titulaire: GRUPO ANTOLIN-INGENIERIA, S.A., 09080 Burgos (ES)
(72) Inventeur: Duchateau, Jean, 43330 Pont Salomon (FR); Hamtache, Nordine, 42700 Firminy (FR)
(74) Mandataire: Delorme, Nicolas

(56) Documents cités:
- WO-A1-03/008230
- FR-A- 2 872 105
- US-A1- 2004 100 114
- US-A1- 2004 100 115

## Description

La présente invention concerne un siège escamotable pour un véhicule automobile.

La présence d'un ou plusieurs sièges escamotables est largement répandue dans de nombreux véhicules de type véhicule de loisir break ou monospace, puisque ce type de siège permet d'adapter l'organisation de l'habitacle du véhicule en fonction de l'utilisation qui en est faite.

Il s'avère, en effet, particulièrement utile de pouvoir configurer à loisir l'espace intérieur d'un véhicule en déployant les sièges pour le transport des passagers ou en repliant dans le plancher du véhicule, ces même sièges pour le transport d'objets.

Dans le cas de véhicules présentant trois rangées de sièges numérotées de 1 à 3 en allant de l'avant vers l'arrière du véhicule, ce sont le plus généralement les sièges de rang 3 qui sont escamotables dans une cuvette ménagée dans le plancher du véhicule.

On doit constater que, bien souvent, les sièges escamotables du fait même de leur architecture perdent certaines fonctionnalités par rapport à des sièges de structure classique. Notamment, les sièges de rang 3 ne présentent pas généralement de réglage de position longitudinale, ce qui peut être préjudiciable à la modularité de l'habitacle.

Le document US2004/0100115 montre un siège escamotable qui répond partiellement à la problématique de modularité, car la course longitudinale sur laquelle le siège peut être déplacé apparaît extrêmement limitée.

Il apparaît donc souhaitable d'apporter des améliorations aux sièges escamotables de véhicule.

Un but de l'invention est de proposer un siège qui, tout en étant escamotable, peut de plus être réglable en position dans le véhicule lorsqu'il est déployé et améliore la modularité de l'habitacle du véhicule.

L'invention porte sur un siège pour un véhicule ayant un plancher dans lequel est ménagée une cuvette sensiblement parallélépipédique ; le siège peut être placé dans une configuration déployée ou dans une configuration escamotée dans laquelle le siège est rangé dans la cuvette; le siège comprend une assise sur laquelle est articulé un dossier par une liaison fonctionnelle autorisant le pivotement du dossier entre une position déployée du siège dans laquelle le dossier forme avec l'assise un angle obtus et une position tablette dans laquelle le dossier est en appui contre l'assise ; le siège présente également un piètement reliant fonctionnellement l'assise à deux profilés glissants susceptibles de coulisser dans deux glissières parallèles disposées de part et d'autre de la cuvette; le piètement comprend un premier jambage et un second jambage ; le premier jambage est relié à chacun des profilés par une liaison déverrouillable D1 et à l'assise par deux liaisons pivot P1, ce premier jambage est mobile entre une première position de verrouillage dans laquelle il est verrouillé sur les profilés et une seconde position de déverrouillage dans laquelle il est rabattu contre la face inférieure de l'assise; le second jambage est relié à l'assise par deux liaisons pivot P2 et aux profilés glissants par deux liaisons pivot P3, les liaisons pivot P2 et P3 permettant après déverrouillage de la liaison D1, d'une part, un pivotement de l'assise par rapport au jambage jusqu'à ce que l'assise soit dans le prolongement de celui-ci et, d'autre part, un pivotement du second jambage en direction de la cuvette de façon à disposer le siège dans sa configuration escamotée, le dossier étant au fond de la cuvette, l'assise superposée sur le dossier, le premier jambage contre l'assise et le second jambage dans le prolongement des glissières, le siège selon l'invention étant caractérisé en ce que les deux glissières se prolongent en avant et/ou en arrière de la cuvette, au moins l'une des glissières est pourvue d'une série d'ouvertures réparties selon un pas régulier permettant de positionner ledit siège en une position quelconque par engagement d'au moins un doigt dans l'une des ouvertures.

L'invention réalise ainsi un siège qui peut être escamoté ou être déployé offrant ainsi toutes les fonctionnalités requises en matière de modularité. Ce siège présente, par ailleurs, l'avantage conséquent d'être positionné sur des glissières et, peut ainsi tout en étant escamotable, proposer un réglage de sa position sur une course très importante puisque le siège peut se trouver en position déployée en surplomb de la cuvette de rangement ou au choix d'un utilisateur avant ou en arrière de celle-ci.

Le siège selon l'invention offre donc une multitude de positionnement dans sa position déployée puisque, dans sa position déployée, le siège selon l'invention peut être réglé longitudinalement sur une course très importante tout en offrant la possibilité d'un escamotage complet dans le plancher. Le siège selon l'invention offre donc un degré de modularité supplémentaire par rapport aux sièges de l'art antérieur.

D'autres caractéristiques de l'invention sont décrites dans les revendications dépendantes.

Selon une disposition avantageuse, le premier jambage comprend deux flasques disposés de part et d'autre de l'assise. Ce jambage est donc réalisé par des éléments relativement massifs, ce qui peut s'avérer bénéfique pour la retenue du siège dans le cas d'une forte décélération due à un impact.

Il est envisagé que chacun des flasques présente un palier dans lequel peut être engagé un axe dépassant de l'assise et un crochet mobile pouvant venir en prise avec un téton faisant saillie d'un profilé glissant, ce qui permet au premier jambage de venir se replier contre l'assise.

Une disposition du siège prévoit que le second jambage présente deux pieds qui possèdent chacun à l'une de leur extrémité un palier dans lequel peut s'engager un axe fixé sur l'assise et à leur seconde extrémité un axe fixé sur le profilé glissant.

Pour assurer le positionnement du siège, il peut être prévu que chacune des glissières soit pourvue d'une série d'ouvertures réparties selon un pas régulier permettant de positionner ledit siège en une position quelconque par engagement d'au moins un doigt dans l'une des ouvertures.

Dans une forme d'exécution, le dossier est relié à l'assise par une liaison pivot déverrouillable, ce qui permet de rabattre le dossier contre l'assise pour l'escamotage du siège et permet également de régler la position angulaire du dossier par rapport à l'assise.

Pour permettre le réglage de l'inclinaison du dossier, il est alors envisagé que le dossier et l'assise soient respectivement équipés de secteurs dentés qui peuvent s'engrener sélectivement.

L'invention concerne également un véhicule présentant un plancher dans lequel est ménagé une cuvette sensiblement parallélépipédique et dans lequel sont disposées deux glissières de part et d'autre de la cuvette, le véhicule recevant dans chacune de ses glissières un siège tel que défini précédemment.

Le véhicule peut présenter un volet permettant de refermer la cuvette lorsque celle-ci sert de coffre de rangement.

Pour sa bonne compréhension, l'invention est décrite en référence aux dessins ci annexés représentant, à titre d'exemple non limitatif, une forme de réalisation d'un siège escamotable et réglable en position selon l'invention.
Figure 1 montre, en vue partielle, un véhicule présentant un plancher embarquant un siège selon une forme de réalisation de l'invention ; la figure 1 montre le siège selon l'invention selon trois états qu'il est susceptible de prendre à savoir un état déployé, un état escamoté et un état intermédiaire semi escamoté,
Figure 2 représente en perspective le siège selon l'invention,
Figure 3 représente en perspective le siège selon l'invention dépouillé de ses éléments de garnissage et carters de protection,

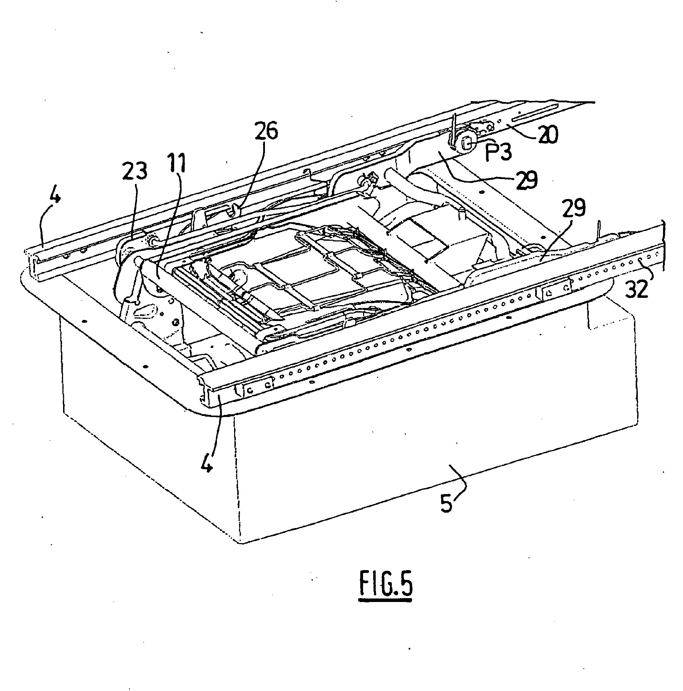

Figures 4 et 5 montrent en perspective le siège de figure 3 au cours de son repliement,
Figures 6 à 11 montrent une séquence de dépliage du siège.

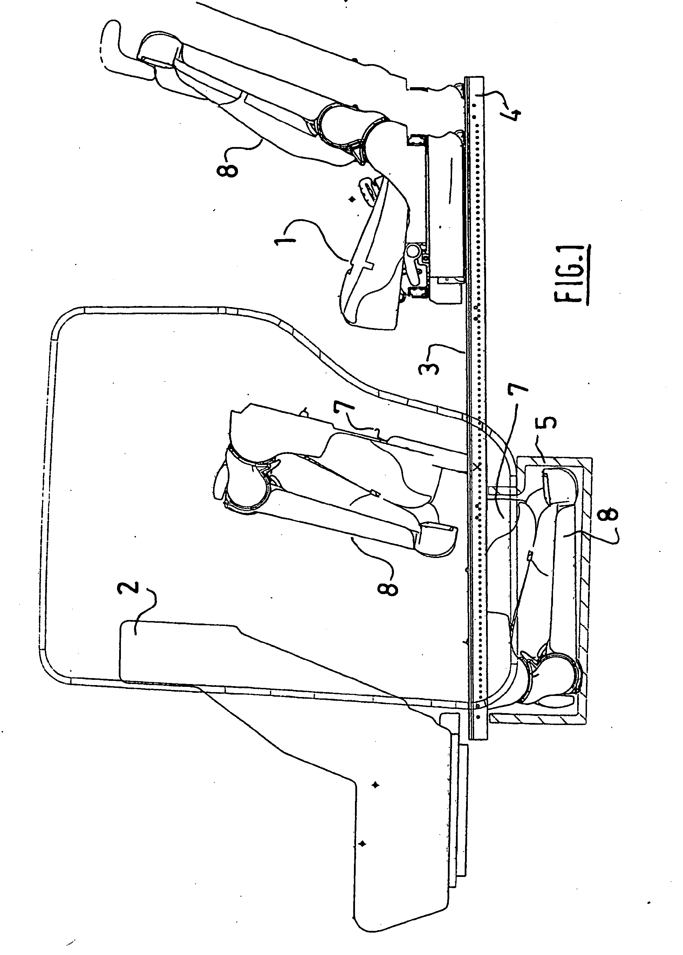

De manière classique comme le montre la figure 1, un véhicule présente un siège avant 2 sur lequel prend place un conducteur du véhicule ; le véhicule présente également un emplacement pour des sièges de rang 2 accessibles par une porte arrière du véhicule ainsi qu'un emplacement pour des sièges de rang 3.

La figure 1 fait apparaître un plancher 3 de véhicule dans lequel sont encastrées deux glissières 4 parallèles. Ces glissières 4 sont des profilés métalliques qui sont fixés dans des rainures ménagées dans le plancher 3.

On note également la présence d'une cuvette 5 de forme sensiblement parallélépipédique qui est aménagée dans le plancher 3 du véhicule.

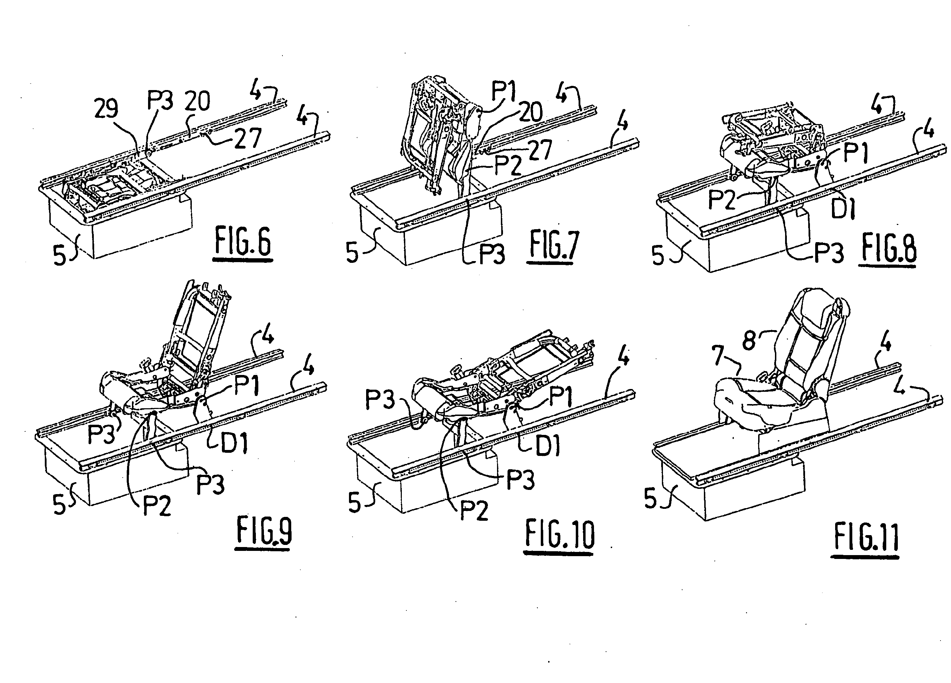

On peut se reporter aux figures 6 à 11 pour apprécier plus précisément la position de la cuvette 5 par rapport aux glissières 4. Comme cela est représenté clairement sur les figure 6 et suivantes, le plancher 3 intègre deux glissières 4 parallèles qui sont, disposées de part et d'autre de la cuvette 5 et sont adjacentes aux deux longueurs de celle-ci.

Sur le dessin, on peut voir que les glissières 4 se prolongent en arrière de la cuvette 5. Selon la configuration du véhicule, il peut être envisagé que les glissières 4 se prolongent en avant de la cuvette 5 ; il peut également être envisagé que les glissières 4 se prolongent en avant et en arrière de la cuvette 5.

Si, sur le dessin, il est représenté une unique cuvette 5, il est bien entendu que le véhicule peut être équipé de une, deux ou trois cuvettes alignées dans le sens transversal selon la largeur du véhicule et/ou des sièges.

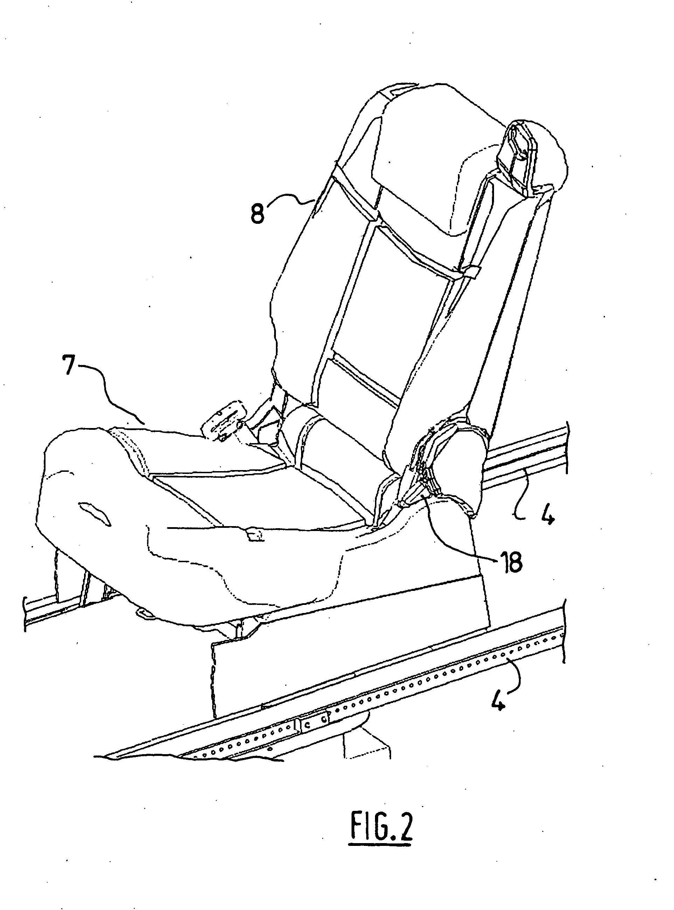

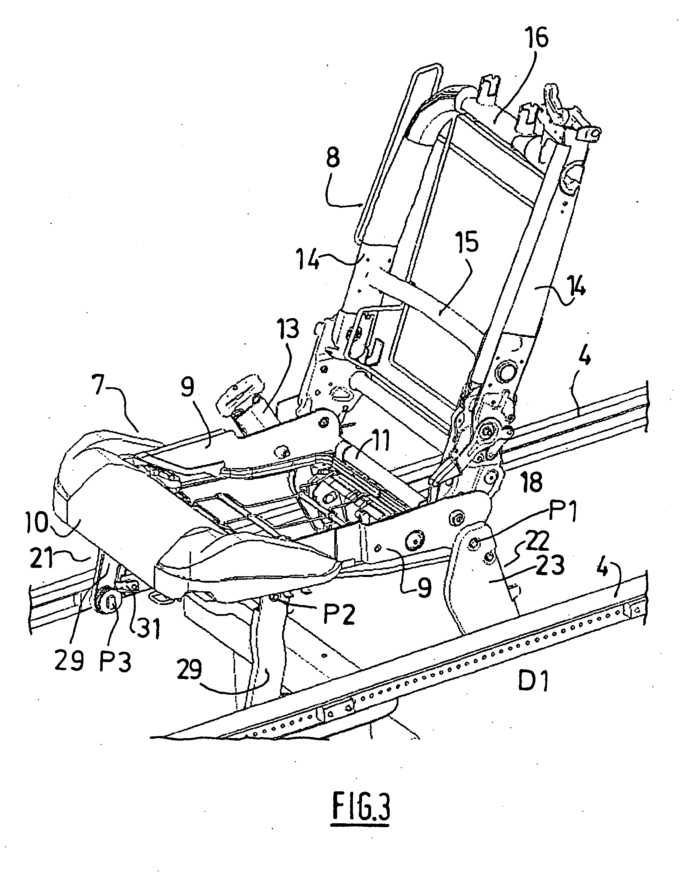

Pour la description du siège proprement dit, on pourra se reporter aux Figures 2 et 3 qui montrent une forme de réalisation d'un siège selon l'invention dans sa configuration déployée.

Ce siège comprend donc une assise 7 sur laquelle est articulé un dossier 8.

En se référant à la Figure 3 on peut voir que la structure proprement dite de l'assise 7 peut présenter deux brancards 9 latéraux reliés à chacune de leurs extrémités par des traverses 10 et 11 de façon à former un élément rectangulaire rigide qui peut recevoir une garniture d'assise.

On peut noter que l'assise 7 peut recevoir également un pédoncule 13 de ceinture de sécurité.

Pour sa part, le dossier 8 peut être constitué de deux montants 14 latéraux reliés par deux éléments transversaux 15 et 16 de façon à constituer un élément rigide sur lequel peut être disposée une garniture de dossier.

Le dossier 8 est articulé sur l'assise 7 et des moyens de blocage permettent de verrouiller le dossier 8 par rapport à l'assise 7 dans une position choisie par un utilisateur. Les moyens de blocage du dossier 8 sur l'assise 7 peuvent comprendre un système connu en soi comprenant des secteurs dentés solidaires respectivement de l'assise 7 et du dossier 8 ; ces secteurs dentés peuvent venir s'engrener pour verrouiller le dossier 8 dans une position choisie par un utilisateur. Pour permettre le déverrouillage du dossier 8, il est prévu un levier 18 qui permet de désengrener les secteurs dentés ce qui ainsi autorise le pivotement du dossier 8 et son ajustement angulaire par rapport à l'assise 7.

Dans l'exemple représenté sur les figures, le dossier 8 peut embarquer une ceinture de sécurité. Cette disposition, qui présente des avantages en terme de confort pour le passager qui prend place sur le siège, est toutefois indépendante de l'invention ; le siège selon l'invention peut tout à fait être mis en oeuvre avec une ceinture de sécurité fixée sur la structure même du véhicule.

Le siège présente de plus un piètement qui assure la liaison de l'assise 7 à la structure même du véhicule. Ce piètement présente un premier et un second jambage qui ont la particularité de relier l'assise 7 du siège à deux profilés 20 qui peuvent coulisser respectivement dans chacune des glissières 4 placées dans le plancher 3 du véhicule.

Dans l'exemple représenté, le siège est orienté dans le sens de déplacement du véhicule ; par rapport au sens de déplacement normal du véhicule, on définit donc un jambage avant 21 et un jambage arrière 22.

Si l'on se réfère à la figure 3, on peut voir que le jambage arrière 22 peut être constitué de deux flasques 23 qui relient l'extrémité arrière de chacun des brancards 9 de l'assise 7 à chacun des profilés 20 qui coulissent dans les glissières.

La particularité du jambage arrière 22 réside dans le fait que chacun des deux flasques 23 qui le constituent sont reliés à chacun des brancards par une liaison pivot P1, tandis que l'extrémité des flasques 23 reliés à chacun des profilés 20 présente une liaison déverrouillable D1.

A cet effet, la partie inférieure des flasques 23 peut être dotée de crochets 26 pivotants ; chacun de ces crochets 26 peut venir se fixer sur un téton 27 qui dépassent de chacun des profilés 20 coulissants. Les tétons 27 apparaissent, notamment, représentés aux figures 6 et 7 du dessin ci-annexé. La commande des crochets 26 permettant le déverrouillage de ceux-ci peut se faire par un système de tringles ou de sangles qui peut être actionné par un utilisateur.

Le jambage avant 21 est constitué, pour sa part, de deux pieds 29 qui relient l'extrémité avant de chacun des brancards 9 à chacun des profilés 20.

Chacun des pieds 29 constituant le jambage avant 21 est pourvu à son extrémité de liaison avec l'assise 7 d'une liaison pivot P2 constituée, par exemple, par un axe engagé dans un palier et est pourvu à son extrémité de liaison avec un profilé 20 d'une liaison pivot P3 constituée, par exemple, par un axe engagé dans un palier.

On peut préciser que chacune des liaisons pivots P1, P2, P3 peut être assistée par un moyen élastique tel qu'un ressort 31 ou un vérin à gaz.

Le siège, tel qu'il apparaît donc représenté à la figure 3, peut coulisser à loisir par rapport aux glissières 4 insérées dans le plancher sur toute la longueur de celle-ci. La Figure 1 montre ainsi le siège dans deux positions longitudinales par rapport au plancher du véhicule. Le blocage du siège dans l'une de ses positions longitudinales peut être réalisé par des tétons qui s'engagent dans des ouvertures 32 pratiqués selon un pas régulier dans l'une ou dans les deux glissières 4.

Le siège peut ainsi se déplacer notamment vers une position dans laquelle il est en surplomb de la cuvette 5. Cette cuvette 5 peut être fermée par un couvercle et peut ainsi servir de coffre de rangement lorsque le siège n'y est pas rangé. On peut préciser que la cuvette 5 ne présente en elle-même aucun organe mécanique ; ainsi, lorsque la cuvette est utilisée comme espace de rangement, son espace intérieur est utilisable en totalité.

Une particularité du siège selon l'invention est que, en le plaçant dans une position dans laquelle le jambage avant 21 se trouve adjacent à la cuvette 5, il est possible de ranger entièrement le siège dans cette cuvette 5.

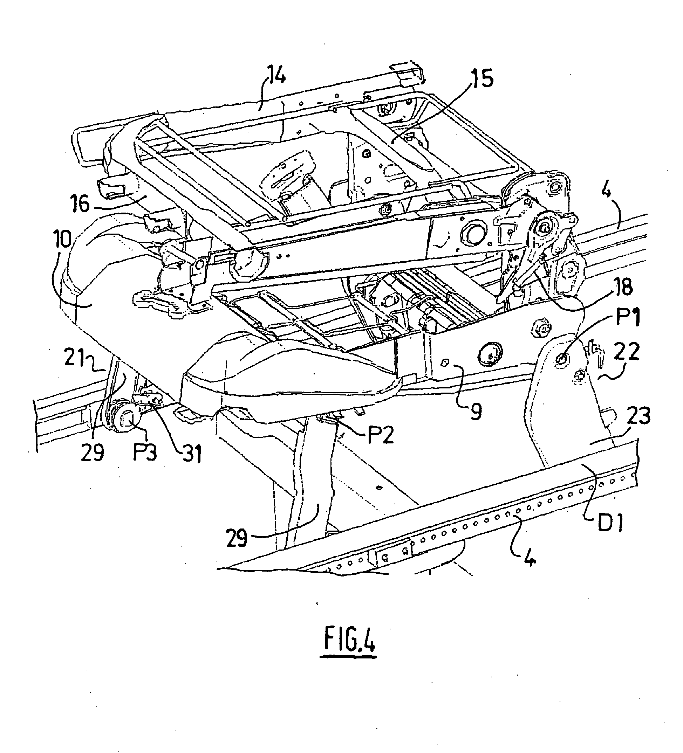

Pour cela, il convient en premier lieu de rabattre le dossier 8 sur l'assise 7 pour placer le siège en configuration dite portefeuille ou tablette. Cette étape est illustrée à la Figure 4.

Ensuite, il convient de déverrouiller le jambage arrière 22 des profilés 20 glissants. Cette opération est réalisée en déverrouillant la liaison D1 ce qui, dans l'exemple représenté, revient à dégager les crochets 26 des tétons 27 dont les profilés 20 sont équipés. Un système de tringle ou de sangle peut permettre d'agir sur les crochets 26. Le siège n'est alors retenu que par le jambage avant 21 à chacun des profilés 20.

Un élément d'assistance tel qu'un ressort peut alors rabattre chacun des flasques 23 constituant le jambage arrière en direction de l'assise 7. L'assise 7 voit donc se rabattre sur elle-même le dossier 8 et le jambage arrière 22 sous forme des deux flasques 23 latéraux.

Simultanément, grâce à des éléments de rappel élastique tels que des ressorts ou des vérins à gaz qui peuvent synchroniser les rotations de l'assise 7 par rapport au piètement, l'assise 7 - dont le partie arrière n'est plus retenue - peut alors pivoter par rapport au jambage avant 21, jusqu'à se mettre dans le prolongement de celui-ci. La Figure 7 illustre cet état du siège. Il peut être envisagé de disposer des butées sur l'assise 7 et/ou le jambage avant pour maintenir l'assise 7 dans le prolongement du jambage avant ; l'assise 7 et le jambage avant 21 sont alors sensiblement perpendiculaires au plancher 3.

L'assise 7 et le jambage avant 21 peuvent ensuite pivoter vers la cuvette 5. Le siège peut alors prendre place dans la cuvette ; chacun des pieds 29 constituant le jambage avant 21 se trouve alors dans le prolongement des profilés 20 glissants tandis que le dossier 8 est disposé contre le fond de la cuvette 5 et que l'assise 7 est superposée sur le dossier 8.

On peut alors rabattre un couvercle pour fermer la cuvette de façon à obtenir alors un plancher totalement plat. On voit ainsi que le siège selon la présente invention, peut être disposé dans un véhicule soit en rang 2, soit en rang 3 et peut être escamoté dans une cuvette.

Les figures 6 à 11 illustrent une séquence de déploiement du siège à partir de sa position d'escamotage (Figure 6) jusqu'à sa position de déploiement (Figure 11). La figure 11 permet d'apprécier la mobilité longitudinale du siège qui constitue l'un des avantages substantiels de l'invention.

On peut préciser que le jambage arrière 22, qui dans l'exemple représenté est éclipsable, vient se verrouiller sur des tétons des glissières assurant ainsi une anti rotation et un blocage de la cinématique du siège.

Dans l'exemple représenté, la cuvette 5 est située au niveau du rang 2 du véhicule, mais il peut tout à fait être envisagé de la positionner au niveau du rang 3.

Dans ce cas de figure, la fonction de déverrouillage se trouve embarquée sur le jambage avant.

Il peut également être envisagé de disposer les glissières de réglage de la position du siège dans un sens transversal au véhicule ; ceci permet de régler la position du siège transversalement et d'en assurer son escamotage.

L'un des points extrêmement positif du siège selon l'invention est qu'il permet de s'affranchir de la contrainte des sièges connus qui oblige à concevoir un véhicule dans lequel le siège est obligatoirement adjacent à la cuvette dans laquelle il pourra être rangé. L'invention permet de disjoindre totalement la position de la cuvette de rangement et la position du siège qui pourra être escamoté dans la cuvette.

## Revendications

1. Siège pour un véhicule ayant un plancher dans lequel est ménagée une cuvette (5) sensiblement parallélépipédique, ledit siège pouvant être placé dans une configuration déployée ou dans une configuration escamotée dans laquelle le siège est rangé dans la cuvette (5), ledit siège comprenant :
une assise (7) sur laquelle est articulé un dossier (8) par une liaison fonctionnelle autorisant le pivotement du dossier (8) entre une position déployée du siège dans laquelle le dossier (8) forme avec l'assise (7) un angle obtus et une position tablette dans laquelle le dossier (8) est en appui contre l'assise (7), et
un piètement reliant fonctionnellement l'assise (7) à deux profilés (20) glissants susceptibles de coulisser dans deux glissières (4) parallèles disposées de part et d'autre de la cuvette (5) , le piètement comprenant un premier jambage et un second jambage,
le premier jambage étant relié à chacun des profilés par une liaison déverrouillable D1 et à l'assise (7) par deux liaisons pivot P1, ce jambage étant mobile entre une première position de verrouillage dans laquelle il est verrouillé sur les profilés (20) et une seconde position de déverrouillage dans laquelle il est rabattu contre la face inférieure de l'assise (7),
le second jambage étant relié à l'assise (7) par deux liaisons pivot P2 et aux profilés (20) glissants par deux liaisons pivot P3, les liaisons pivot P2 et P3 permettant après déverrouillage de la liaison D1, d'une part, un pivotement de l'assise (7) par rapport au jambage jusqu'à ce que l'assise (7) soit dans le prolongement de celui-ci et, d'autre part, un pivotement du second jambage en direction de la cuvette (5) de façon à disposer le siège dans sa configuration escamotée, le dossier (8) étant au fond de la cuvette l'assise (7) superposée sur le dossier (8), le premier jambage étant contre l'assise (7) et le second jambage étant dans le prolongement des glissières (4),
**caractérisé en ce que** les deux glissières (4) se prolongent en avant et/ou en arrière de la cuvette (5), au moins l'une des glissières (4) étant pourvue d'une série d'ouvertures réparties selon un pas régulier permettant de positionner ledit siège en une position quelconque par engagement d'au moins un doigt dans l'une des ouvertures.

2. Siège selon la revendication 1, **caractérisé en ce que** le premier jambage comprend deux flasques (23) disposés de part et d'autre de l'assise (7).

3. Siège selon la revendication 2, **caractérisé en ce que** chacun des flasques (23) présente un palier dans lequel peut être engagé un axe dépassant de l'assise (7) et un crochet (26) mobile pouvant venir en prise avec un téton (27) faisant saillie d'un profilé glissant.

4. Siège selon la revendication 3, **caractérisé en ce que** le second jambage présente deux pieds (29) qui possèdent chacun à l'une de leur extrémité un palier dans lequel peut s'engager un axe fixé sur l'assise (7) et à leur seconde extrémité un axe fixé sur le profilé (20) glissant.

5. Siège selon l'une des revendications 1 à 4, **caractérisé en ce que** le dossier (8) est relié à l'assise (7) par une liaison pivot déverrouillable.

6. Siège selon la revendication 5, **caractérisé en ce que** le dossier (8) et l'assise (7) sont respectivement équipés de secteurs dentés qui peuvent s'engrener sélectivement.

7. Véhicule présentant un plancher (3) dans lequel est ménagé une cuvette (5) sensiblement parallélépipédique et dans lequel sont disposées deux glissières (4) de part et d'autre de la cuvette (5), **caractérisé en ce que** le véhicule reçoit dans chacun de ses glissières un siège selon l'une des revendications 1 à 6.

8. Véhicule selon la revendication 7, **caractérisé en ce qu'**il présente un volet permettant de refermer la cuvette (5).

## Claims

1. A seat for a vehicle having a floor, in which a substantially block-shaped cavity (5) is made, said seat being capable of being placed in an unfolded configuration or in a retracted configuration, in which the seat is stowed away in the cavity (5), said seat comprising:
a seating (7), at which a seat back (8) is hinged via a functional link allowing for the seat back (8) to be pivoted between an unfolded position of the seat, in which the seat back (8) forms an obtuse angle with the seating (7), and a tray position, in which the seat back (8) is resting on the seating (7), and
a base operatively connecting the seating (7) with two sliding profiles (20) capable of sliding in two parallel slide bars (4) arranged on either side of the cavity (5), the base comprising a first post and a second post,
the first post being connected to each of the profiles by an unlockable link D1 and to the seating (7) by two pivot links P1, with the post being mobile between a first locking position, in which it is locked on the profiles (20), and a second unlocking position, in which it is folded back against the lower side of the seating (7),
the second post being connected to the seating (7) by two pivot links P2 and to the sliding profiles (20) by two pivot links P3, with the pivot links P2 and P3 allowing after unlocking of link D1, on the one hand, for the seating (7) to be pivoted with respect to the post until the seating (7) is located in the extension thereof and, on the other hand, for the second post to be pivoted towards the cavity (5) so as to arrange the seat in the retractable configuration thereof, the seat back (8) being located at the bottom of the cavity, the seating (7) overlapping the seat back (8), the first post being located against the seating (7) and the second post being located in the continuation of the slide bars (4),
**characterized in that** both slides (4) continue towards the front and/or back of the cavity (5), with at least one of the slide bars (4) being provided with a series of openings distributed at a regular pitch allowing for said seat to be positioned in any position by engaging at least one finger into any of the openings.

2. The seat according to claim 1, **characterized in that** the first post comprises two flanges (23) arranged on either side of the seating (7).

3. The seat according to claim 2, **characterized in that** each of the flanges (23) has a bearing, in which an axis jutting out from the seating (7) can be engaged, and a mobile hook (26), which can engage a pin (27) protruding from a slide profile.

4. The seat according to claim 3, **characterized in that** the second post has two feet (29), which each have at one of the ends thereof a bearing, into which an axis fixed to the seating (7) can engage, and at the second end thereof an axis fixed to the slide profile (20).

5. The seat according to any of claims 1 to 4, **characterized in that** the seat back (8) is connected to the seating (7) by an unlockable pivot link.

6. The seat according to claim 5, **characterized in that** the seat back (8) and the seating (7) are respectively fitted with toothed sections, which can mesh selectively.

7. A vehicle having a floor (3), in which a substantially block-shaped cavity (5) is made, and in which two slide bars (4) are arranged on either side of the cavity (5), **characterized in that** the vehicle receives in each of the slide bars thereof a seat according to any of claims 1 to 6.

8. The vehicle according to claim 7, **characterized in that** it has a flap allowing for the cavity (5) to be closed.

## Patentansprüche

1. Sitz für ein Fahrzeug mit einem Boden, in dem eine im Wesentlichen quaderförmige Vertiefung (5) eingerichtet ist, wobei der Sitz in eine aufgestellte Konfiguration und in eine versenkte Konfiguration, in welcher der Sitz in der Vertiefung (5) verstaut ist, gebracht werden kann, wobei der Sitz folgendes umfasst:
eine Sitzfläche (7), an der eine Rückenlehne (8) über eine Funktionsverbindung angelenkt ist, welche die Verschwenkung der Rückenlehne (8) zwischen einer aufgestellten Position des Sitzes, in der die Rückenlehne (8) mit der Sitzfläche (7) einen stumpfen Winkel bildet, und einer flachen Position, in der die Rückenlehne (8) an der Sitzfläche (7) abgestützt ist, erlaubt, und
ein Gestell, das die Sitzfläche (7) funktionsmäßig mit zwei Gleitprofilen (20) verbindet, die auf zwei parallelen Gleitschienen (4), die auf beiden Seiten der Vertiefung (5) angeordnet sind, gleiten können, wobei das Gestell einen ersten Ständer und einen zweiten Ständer umfasst,
wobei der erste Ständer mit jedem der Profile über eine entriegelbare Verbindung D1 und mit der Sitzfläche (7) über zwei Schwenkverbindungen P1 verbunden ist, wobei dieser Ständer zwischen einer ersten Verriegelungsposition, in der er an den Profilen (20) verriegelt ist, und einer zweiten Entriegelungsposition, in der er auf die Innenseite der Sitzfläche (7) umgeklappt ist, bewegbar ist,
wobei der zweite Ständer mit der Sitzfläche (7) über zwei Schwenkverbindungen P2 und mit den Gleitprofilen (20) über zwei Schwenkverbindungen P3 verbunden ist, wobei die Schwenkverbindungen P2 und P3 nach dem Entriegeln der Verbindung D1 einerseits ein Verschwenken der Sitzfläche (7) im Verhältnis zum Ständer erlauben, bis der Sitz (7) sich in dessen Verlängerung befindet, und andererseits ein Verschwenken des zweiten Ständers in Richtung auf die Vertiefung (5) erlauben, um den Sitz in seiner versenkten Konfiguration anzuordnen, wobei sich die Rückenlehne (8) auf dem Boden der Vertiefung befindet, die Sitzfläche (7) der Rückenlehne (8) überlagert ist, der erste Ständer sich an der Sitzfläche (7) befindet und der zweite Ständer sich in der Verlängerung der Gleitschienen (4) befindet,
**dadurch gekennzeichnet, dass** sich die beiden Gleitschienen (4) nach vorne und/oder nach hinten im Verhältnis zu der Vertiefung (5) verlängern, wobei mindestens eine der Gleitschienen (4) mit einer Reihe von Öffnungen versehen ist, die in gleichmäßigen Schritten verteilt sind, die es ermöglichen, den Sitz durch den Eingriff mindestens eines Zapfens in eine der Öffnungen in einer beliebigen Position zu positionieren.

2. Sitz nach Anspruch 1, **dadurch gekennzeichnet, dass** der erste Ständer zwei Flansche (23) umfasst, die auf beiden Seiten der Sitzfläche (7) angeordnet sind.

3. Sitz nach Anspruch 2, **dadurch gekennzeichnet, dass** jeder der Flansche (23) ein Lager, mit dem eine Achse in Eingriff gebracht werden kann, welche über die Sitzfläche (7) hinausragt, und einen beweglichen Haken (26), der in einen Ansatz (27), der von einem Gleitprofil aus vorspringt, eingreifen kann, aufweist.

4. Sitz nach Anspruch 3, **dadurch gekennzeichnet, dass** der zweite Ständer zwei Füße (29) aufweist, die jeder an einem ihrer Enden ein Lager besitzen, in das eine Achse eingreifen kann, die an der Sitzfläche (7) befestigt ist, und an ihrem zweiten Ende eine Achse besitzen, die an dem Gleitprofil (20) befestigt ist.

5. Sitz nach einem der Ansprüche 1 bis 4, **dadurch gekennzeichnet, dass** die Rückenlehne (8) mit der Sitzfläche (7) über eine entriegelbare Schwenkverbindung verbunden ist.

6. Sitz nach Anspruch 5, **dadurch gekennzeichnet, dass** die Rückenlehne (8) und die Sitzfläche (7) jeweils mit gezahnten Abschnitten ausgestattet sind, die sich wahlweise verzahnen können.

7. Fahrzeug mit einem Boden (3), in dem eine im Wesentlichen quaderförmige Vertiefung (5) eingerichtet ist, und in dem zwei Gleitschienen (4) auf beiden Seiten der Vertiefung (5) angeordnet sind, **dadurch gekennzeichnet, dass** das Fahrzeug in jeder seiner Gleitschienen einen Sitz nach einem der Ansprüche 1 bis 6 aufnimmt.

8. Fahrzeug nach Anspruch 7, **dadurch gekennzeichnet, dass** es eine Klappe aufweist, die es ermöglicht, die Vertiefung (5) zu verschließen.
